# EUROPEAN PATENT APPLICATION

(11) **EP 4 563 416 A1**
(43) Date of publication of application: **04.06.2025**
(21) Application number: 23893412.9
(22) Date of filing: 25.09.2023
(51) Int. Cl.: B60R 16/023

(54) **METHOD AND APPARATUS FOR MONITORING ABNORMAL WAKE-UP OF VEHICLE, AND SERVER AND STORAGE MEDIUM**

(30) Priority: 23.11.2022 CN 202211476819
(71) Applicant: Deepal Automobile Technology Co., Ltd., Chongqing 401133 (CN)
(72) Inventor: WANG, Yongzhu, Chongqing 401135 (CN); LIU, Suli, Chongqing 401135 (CN); LI, Jiaxing, Chongqing 401135 (CN); LIU, Wei, Chongqing 401135 (CN); ZHAI, Jun, Chongqing 401135 (CN)
(74) Representative: DREISS Patentanwälte PartG mbB
(86) International application number: PCT/CN2023/121224
(87) International publication number: WO 2024/109320

(57) **Abstract**

The present application relates to a method and apparatus for monitoring an abnormal wake-up of a vehicle, and a server and a storage medium. The method comprises: after a vehicle is powered on and woken up, receiving actual vehicle information sent by the vehicle; according to the actual vehicle information, determining whether the vehicle meets a preset abnormal wake-up condition; and if the preset abnormal wake-up condition is met, determining that the vehicle is in an abnormal wake-up state, generating an abnormal wake-up reminder signal, and sending the abnormal wake-up reminder signal to a preset terminal. In the present application, after it is detected that a vehicle is powered on, classification and determination are performed on a manual operation, normal wake-up and abnormal wake-up by relying on the cooperative monitoring of a vehicle end and a cloud end, and early-warning information is sent to maintenance personnel in a timely manner, such that the timeliness and accuracy of abnormal vehicle wake-up monitoring are effectively improved, and an early warning is given to the maintenance personnel, so as to minimize damage caused to a vehicle power source by means of the abnormal wake-up, thereby avoiding the occurrence of a voltage of a low-voltage power source of the vehicle being insufficient, and ensuring the service life of the power source.

## Description

### CROSS-REFERENCE TO RELATED APPLICATION

The present application is based on and claims priority to Chinese Patent Application No. 202211476819.6, filed on November 23, 2022, the entire disclosure of which is incorporated herein by reference.

### TECHNICAL FIELD

The present disclosure relates to the field of intelligent networked vehicle technologies, and in particular to a method and apparatus for monitoring an abnormal wake-up of a vehicle, a server, and a storage medium.

### BACKGROUND

With increasing complexity of electrical controls of an intelligent networked vehicle, the wake-up manner of the vehicle is not only derived from a key signal, but also from an increasing number of other wake-up sources, such as external charging wake-up, remote door unlock wake-up, timed ventilation wake-up, and sentry mode wake-up. More and more wake-up manners have led to needs for various power-up operations in the vehicle. When these wake-ups cause a power-up problem of the vehicle, such that the vehicle cannot be powered down normally, the low-voltage power supply of the vehicle is consumed continuously, resulting in undercharge of the low-voltage power supply of the vehicle, such that the vehicle is unable to start. Therefore, how to monitor the power-up of the vehicle and determine a state of the vehicle after the vehicle is woken up has become an urgent problem to be solved.

Currently, in the related art CN114954309A, when a non-sleeping duration of the vehicle is greater than a predetermined duration or the vehicle wakes up abnormally, a non-sleeping controller may be found out based on a network management message to perform a forced reset and power down, avoiding the undercharge of the vehicle. In addition, in the related art CN113110967A, whether a gateway of the vehicle is in normal sleep may be detected after the power supply of the vehicle is in an OFF state; when the gateway of the vehicle is not in the normal sleep, an abnormal sleep reminder is issued; when the gateway of the vehicle is in the normal sleep, whether the gateway of the vehicle is abnormally woken up is detected; and when the gateway of the vehicle is abnormally woken up, an abnormal wake-up reminder is issued. In this way, detection of abnormal sleep and abnormal wake-up of the vehicle are realized, and the abnormal reminder is issued when the abnormal sleep or the abnormal wake-up exists.

However, in the related art, a human operation, a normal wake-up, and an abnormal wake-up cannot be distinguished and determined, and cause of the abnormality cannot be quickly found out based on the wake-up determination results during the troubleshooting on site, which needs to be solved urgently.

### SUMMARY

The present disclosure provides a method and apparatus for monitoring of an abnormal wake-up of a vehicle, a server, and a storage medium, to solve problems in which a human operation, a normal wake-up, and an abnormal wake-up cannot be distinguished and determined, and cause of the abnormality cannot be quickly found out based on wake-up determination results during troubleshooting on site.

The present disclosure relates to a method for monitoring of an abnormal wake-up of a vehicle. The method includes: receiving, after the vehicle is powered up and woken up, actual vehicle information sent by the vehicle; determining, based on the actual vehicle information, whether the vehicle satisfies a predetermined abnormal wake-up condition; and determining, in response to determining that the vehicle satisfies the predetermined abnormal wake-up condition, that the vehicle is in an abnormal wake-up state, generating an abnormal wake-up notification signal, and sending the abnormal wake-up notification signal to a predetermined terminal.

According to the above technical means, in the embodiment of the present disclosure, after the vehicle is monitored to be powered up, a human operation, a normal wake-up, and an abnormal wake-up are distinguished and determined by relying on the collaborative monitoring of the vehicle side and a cloud, and early warning information is sent to maintenance personnel in a timely manner. Therefore, timeliness and accuracy of monitoring the abnormal wake-up of the vehicle are effectively improved, and an early warning reminder is provided to the maintenance personnel, to minimize damage caused by the abnormal wake-up to a power supply of the vehicle. In this way, undercharge of a low-voltage power supply of the vehicle is avoided to ensure a service life of the power supply.

In an embodiment of the present disclosure, the actual vehicle information includes at least one of a vehicle key state, a wake-up source threshold, a wake-up condition, and a current communication activity.

According to the above technical mean, in the embodiment of the present disclosure, reliable data support is provided for subsequent abnormal wake-up determination and the troubleshooting of the vehicle problem by collecting the corresponding vehicle information in real time, which effectively ensures reliability of the abnormal wake-up determination.

In an embodiment of the present disclosure, the determining, based on the actual vehicle information, whether the vehicle satisfies the predetermined abnormal wake-up condition includes: identifying a power-up category of the vehicle based on the vehicle key state; and determining, in response to the power-up category being a key power-up category, that the vehicle does not satisfy the predetermined abnormal wake-up condition.

According to the above technical means, in the embodiment of the present disclosure, the power-up category of the vehicle is identified based on the vehicle key state to determine whether the category satisfies the abnormal wake-up condition, thereby effectively improving rationality and efficiency of determining the wake-up state.

In an embodiment of the present disclosure, the determining, based on the actual vehicle information, whether the vehicle satisfies the predetermined abnormal wake-up condition further includes: querying, in response to the power-up category being not the key power-up category, a predetermined table based on the wake-up source threshold to obtain a wake-up identification; determining, in response to the wake-up identification being not a predetermined abnormal wake-up identification, that the vehicle does not satisfy the predetermined abnormal wake-up condition; and determining, in response to the wake-up identification being the predetermined abnormal wake-up identification, whether the vehicle satisfies the wake-up condition. In response to determining that the vehicle does not satisfy the wake-up condition, it is determined that the vehicle satisfies the predetermined abnormal wake-up condition, and in response to determining that the vehicle satisfies the wake-up condition, it is determined that the vehicle satisfies the predetermined abnormal wake-up condition when a wake-up duration is greater than a predetermined duration.

According to the above technical means, in the embodiment of the present disclosure, based on a cloud and in accordance with a wake-up flag bit, the abnormal wake-up is determined based on the set determination conditions. Therefore, the rationality and the reliability of determining the wake-up state is further improved to provide an intuitive and reliable basis for subsequent troubleshooting. In this way, efficiency of the abnormal processing is improved, and user experience is thus enhanced.

In an embodiment of the present disclosure, the determining, based on the actual vehicle information, whether the vehicle satisfies the predetermined abnormal wake-up condition further includes: detecting, based on the current communication activity, whether the vehicle satisfies a predetermined continuous network activity condition; and determining, in response to detecting that the vehicle satisfies the predetermined continuous network activity condition, that the vehicle satisfies the predetermined abnormal wake-up condition.

According to the above technical means, in the embodiment of the present disclosure, whether the network activity that lasts for a predetermined duration exists on the communication network is detected to determine whether the abnormal wake-up exists. Therefore, the abnormal wake-up of the vehicle is analyzed and determined in a more comprehensive and scientific manner, to allow for timely, accurate and comprehensive monitoring of the abnormal wake-up of the vehicle. In this way, of the undercharge of the vehicle due to the abnormal wake-up of the vehicle, which leads to the vehicle being unable to start, can be effectively avoided. As a result, the wake-up state determination function and reliability of the vehicle are greatly improved.

A second aspect of the present disclosure provides an apparatus for monitoring an abnormal wake-up of a vehicle. The apparatus includes a reception module, a determination module, and a generation module. The reception module is configured to receive, after the vehicle is powered up and woken up, actual vehicle information sent by the vehicle. The determination module is configured to determine, based on the actual vehicle information, whether the vehicle satisfies a predetermined abnormal wake-up condition. The generation module is configured to determine, in response to determining that the vehicle satisfies the predetermined abnormal wake-up condition, that the vehicle is in an abnormal wake-up state, generate an abnormal wake-up notification signal, and send the abnormal wake-up notification signal to a predetermined terminal.

In an embodiment of the present disclosure, the actual vehicle information includes at least one of a vehicle key state, a wake-up source threshold, a wake-up condition, and a current communication activity.

In an embodiment of the present disclosure, the determination module includes an identification unit and a first determination unit. The identification unit is configured to identify a power-up category of the vehicle based on the vehicle key state. The first determination unit is configured to determine, in response to the power-up category being a key power-up category, that the vehicle does not satisfy the predetermined abnormal wake-up condition.

In an embodiment of the present disclosure, the determination module further includes a query unit and a second determination unit. The query unit is configured to query, in response to the power-up category being not the key power-up category, a predetermined table based on the wake-up source threshold to obtain a wake-up identification. The second determination unit is configured to determine, in response to the wake-up identification being not a predetermined abnormal wake-up identification, that the vehicle does not satisfy the predetermined abnormal wake-up condition; determine, in response to the wake-up identification being the predetermined abnormal wake-up identification, whether the vehicle satisfies the wake-up condition. In response to determining that the vehicle does not satisfy the wake-up condition, it is determined that the vehicle satisfies the predetermined abnormal wake-up condition; and in response to determining that the vehicle satisfies the wake-up condition, it is determined that the vehicle satisfies the predetermined abnormal wake-up condition when a wake-up duration is greater than a predetermined duration.

In an embodiment of the present disclosure, the determination module further includes a detection unit and a third determination unit. The detection unit is configured to detect, based on the current communication activity, whether the vehicle satisfies a predetermined continuous network activity condition. The third determination unit is configured to determine, in response to detecting that the vehicle satisfies the predetermined continuous network activity condition, that the vehicle satisfies the predetermined abnormal wake-up condition.

A third aspect of the present disclosure provides a server. The server includes a memory, a processor, and a computer program stored in the memory and executable by the processor. The processor is configured to execute the computer program to implement the method for monitoring the abnormal wake-up of the vehicle as described in the above embodiments.

A fourth aspect of the present disclosure provides a computer-readable storage medium. The computer-readable storage medium has a computer program stored thereon. The computer program is configured to be executed by a processor to implement the method for monitoring the abnormal wake-up of the vehicle as described above.

Therefore, the embodiments of the present disclosure have the beneficial effects as follows.
(1) In the embodiments of the present disclosure, after the vehicle is monitored to be powered up, the human operation, the normal wake-up, and the abnormal wake-up are distinguished and determined by relying on the collaborative monitoring of the vehicle side and the cloud, and the early warning information is sent to the maintenance personnel in a timely manner. Therefore, the timeliness and the accuracy of monitoring the abnormal wake-up of the vehicle are effectively improved, and the early warning reminder is provided to the maintenance personnel, to minimize the damage caused by the abnormal wake-up to the power supply of the vehicle. In this way, the undercharge of the low-voltage power supply of the vehicle is avoided to ensure the service life of the power supply.
(2) In the embodiments of the present disclosure, reliable data support is provided for subsequent abnormal wake-up determination and troubleshooting of the vehicle problem by collecting the corresponding vehicle information in real time, which effectively ensures the reliability of the abnormal wake-up determination.
(3) In the embodiments of the present disclosure, the power-up category of the vehicle is identified based on the vehicle key state, and it is determined whether the category satisfies the abnormal wake-up condition, thereby effectively improving the rationality and the efficiency of determining the wake-up state.
(4) In the embodiments of the present disclosure, based on the cloud and in accordance with the wake-up flag bit, the abnormal wake-up is determined based on the set determination conditions. Therefore, the rationality and the reliability of determining the wake-up state is further improved to provide an intuitive and reliable basis for the subsequent troubleshooting. In this way, the efficiency of the abnormal processing is improved, and the user experience is thus enhanced.
(5) In the embodiment of the present disclosure, whether the network activity that lasts for the predetermined duration exists on the communication network is detected, to determine whether the abnormal wake-up exists. Therefore, the abnormal wake-up of the vehicle is analyzed and determined in a more comprehensive and scientific manner, to allow for the timely, accurate and comprehensive monitoring of the abnormal wake-up of the vehicle. In this way, the undercharge of the vehicle due to the abnormal wake-up of the vehicle, which leads to the vehicle being unable to start, can be effectively avoided. As a result, the wake-up state determination function and reliability of the vehicle are greatly improved.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF DRAWINGS

These and other aspects and advantages of embodiments of the present disclosure will become apparent and more readily appreciated from the following descriptions made with below with reference drawings.
FIG. 1 is a flowchart of a method for monitoring an abnormal wake-up of a vehicle according to an embodiment of the present disclosure;
FIG. 2 is a schematic diagram showing a logical architecture of a process of monitoring an abnormal wake-up of a vehicle according to an embodiment of the present disclosure;
FIG. 3 is a schematic diagram showing an execution logic of a method for monitoring an abnormal wake-up of a vehicle according to an embodiment of the present disclosure;
FIG. 4 is a schematic diagram showing an example of an apparatus for monitoring an abnormal wake-up of a vehicle according to an embodiment of the present disclosure; and
FIG. 5 is a schematic structural diagram of a server according to an embodiment of the present disclosure, where

10-apparatus for monitoring an abnormal wake-up of a vehicle, 100-reception module, 200-determination module, 300-generation module, 501-memory, 502-processor, 503-communication interface.

### DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

A method and apparatus for monitoring an abnormal wake-up of a vehicle, a server, and a storage medium according to embodiments of the present disclosure will be described below with reference to the drawings. In view of the problems mentioned in the above background, the present disclosure provides a method for monitoring an abnormal wake-up of a vehicle. The method includes: receiving, after the vehicle is powered up and woken up, actual vehicle information sent by the vehicle; determining, based on the actual vehicle information, whether the vehicle satisfies a predetermined abnormal wake-up condition; and in response to determining that the vehicle satisfies the predetermined abnormal wake-up condition, determining that the vehicle is in an abnormal wake-up state, generating an abnormal wake-up notification signal, and sending the abnormal wake-up notification signal to a predetermined terminal. In the present disclosure, after the vehicle is monitored to be powered up, a human operation, a normal wake-up, and an abnormal wake-up are distinguished and determined by relying on the collaborative monitoring of the vehicle side and a cloud, and early warning information is sent to maintenance personnel in a timely manner. Therefore, timeliness and accuracy of monitoring the abnormal wake-up of the vehicle are effectively improved, and an early warning reminder is provided to the maintenance personnel, to minimize damage caused by the abnormal wake-up to a power supply of the vehicle. In this way, undercharge of the low-voltage power supply of the vehicle is avoided to ensure a service life of the power supply. Thus, the problems that the human operation, the normal wake-up, and the abnormal wake-up cannot be distinguished and determined, and the cause of the abnormality cannot be quickly found out based on the wake-up determination results during the troubleshooting on site are solved in the related art.

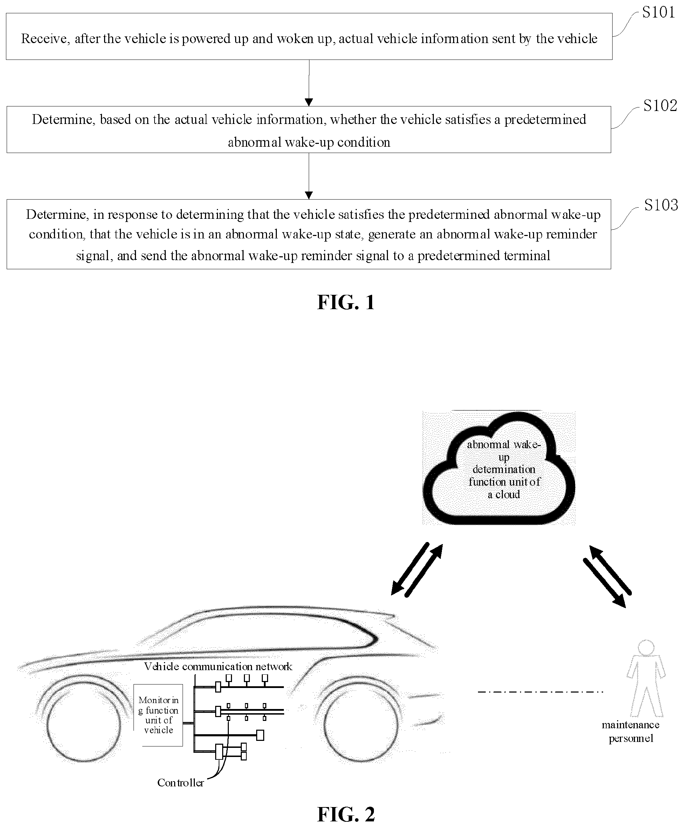

In an embodiment, FIG. 1 is a flowchart of a method for monitoring an abnormal wake-up of a vehicle according to an embodiment of the present disclosure.

As shown in FIG. 1, the method for monitoring the abnormal wake-up of the vehicle includes following steps S101 to S103.

In step S101, receive actual vehicle information sent by the vehicle after the vehicle is powered up and woken up.

It should be noted that when the vehicle is powered up and woken up by a key (such as a mechanical key or a digital key), a predetermined wake-up manner (such as opening the door to wake up, being connected to an external charger to wake up, or timed ventilation to wake up) or due to other reasons, each controller starts operating and a monitoring function unit of the vehicle is powered up at the same time.

Furthermore, in the embodiments of the present disclosure, the vehicle information and a communication activity of each electronic control unit of the vehicle are collected by the monitoring function unit of the vehicle in real time, and sent to the cloud, thereby providing reliable data basis and support for subsequent abnormal wake-up determination.

In an embodiment of the present disclosure, the actual vehicle information includes at least one of a vehicle key state, a wake-up source threshold, a wake-up condition, and a current communication activity.

In an embodiment of the present disclosure, the monitoring function unit of the vehicle starts operating after being powered up, and starts a wake-up timer to collect the vehicle information in real time. The above vehicle information includes the vehicle key (including a mechanical key or a digital key, etc.), the wake-up source threshold, other wake-up conditions, the vehicle communication network activity (selecting any message of each controller for collection), etc. When the monitoring function unit of the vehicle communicates remotely with the cloud, the above information collected by the vehicle may be sent to the cloud for the abnormal wake-up determination.

Therefore, in the embodiments of the present disclosure, the reliable data support is provided for the subsequent abnormal wake-up determination and the troubleshooting of the vehicle problem by collecting the corresponding vehicle information in real time, which effectively ensures the reliability of the abnormal wake-up determination.

In step S102, determine whether the vehicle satisfies a predetermined abnormal wake-up condition based on the actual vehicle information.

After receiving the actual vehicle information sent by the vehicle, whether the vehicle satisfies the abnormal wake-up condition may be further determined based on the above-collected vehicle information in the embodiments of the present disclosure, thereby effectively performing troubleshooting based on the vehicle information.

In an embodiment of the present disclosure, the determining, based on the actual vehicle information, whether the vehicle satisfies the predetermined abnormal wake-up condition includes: identifying, based on the vehicle key state, a power-up category of the vehicle; and determining, in response to the power-up category being a key power-up category, that the vehicle does not satisfy the predetermined abnormal wake-up condition.

It should be noted that after an abnormal wake-up determination function unit of the cloud receives effective information from the monitoring function unit of the vehicle, the abnormal wake-up determination function unit of the cloud enters an abnormal wake-up determination logic. In the embodiment of the present disclosure, whether the vehicle is powered up and woken up due to a mechanical/digital key signal may be first determined. When a power supply of the vehicle is woken up by the key, it means that the vehicle is powered up due to the human operation, which indicates no abnormal wake-up, and no abnormal wake-up determination is performed. When no key signal exists, an abnormal wake-up determination is performed.

Therefore, in the embodiment of the present disclosure, the power-up category of the vehicle is identified based on the vehicle key state to determine whether the category satisfies the abnormal wake-up condition, thereby effectively improving the rationality and the efficiency of determining the wake-up state.

In an embodiment of the present disclosure, the determining, based on the actual vehicle information, whether the vehicle satisfies the predetermined abnormal wake-up condition further includes: querying, in response to the power-up category being not the key power-up category, a predetermined table based on the wake-up source threshold to obtain a wake-up identification; determining, in response to the wake-up identification being not a predetermined abnormal wake-up identification, that the vehicle does not satisfy the predetermined abnormal wake-up condition; and determining, in response to the wake-up identification being the predetermined abnormal wake-up identification, whether the vehicle satisfies the wake-up condition. In response to determining that the vehicle does not satisfy the wake-up condition, it is determined that the vehicle satisfies the predetermined abnormal wake-up condition, and in response to determining that the vehicle satisfies the wake-up condition, it is determined that the vehicle satisfies the predetermined abnormal wake-up condition when a wake-up duration is greater than a predetermined duration.

In an actual execution process, after entering an abnormal wake-up determination procedure, in an embodiment of the present disclosure, a predetermined wake-up flag may be collected by the monitoring function unit of the vehicle. For example, the charging wake-up is set to code 005, the timed ventilation wake-up is set to code 007, and the collected wake-up flag is sent by the monitoring function unit to the cloud.

Further, in an embodiment of the present disclosure, if no mechanical/digital key signal is detected, the wake-up source threshold may be determined, and whether a specific wake-up source exists is determined by querying a table and comparing with the predetermined wake-up source. Each wake-up source in the embodiments of the present disclosure corresponds to a respective wake-up condition. After the specific wake-up source is detected, the specific wake-up source is analyzed based on the respective wake-up condition thereof, such as a wake-up duration, to determine whether the vehicle satisfies the abnormal wake-up condition.

For example, when it is detected that the wake-up source has an identifier 007 in the cloud, whether a specific wake-up source exists is determined by querying the predetermined table. It can be known that the identifier 007 corresponds to the timed ventilation wake-up by querying the table. Then, a duration of the timed ventilation wake-up is determined through timing by the wake-up timer. When the abnormal wake-up threshold is 1.5s, if the timed ventilation wake-up duration is greater than 1.5s and the vehicle is still not in sleep and powered down, it may be determined that the timed ventilation wake-up is an abnormal wake-up, and an abnormal wake-up warning may be performed, otherwise it indicates that this wake-up state is normal and no processing is required.

It can be understood that in the embodiment of the present disclosure, based on the cloud and in accordance with the wake-up flag bit, the abnormal wake-up is determined based on the set determination conditions. Therefore, the rationality and the reliability of determining the wake-up state are further improved to provide the intuitive and reliable basis for the subsequent troubleshooting. In this way, the efficiency of the abnormal processing is improved, and the user experience is thus enhanced.

In an embodiment of the present disclosure, the determining, based on the actual vehicle information, whether the vehicle satisfies the predetermined abnormal wake-up condition further includes: detecting, based on the current communication activity, whether the vehicle satisfies a predetermined continuous network activity condition; and determining, in response to detecting that the vehicle satisfies the predetermined continuous network activity condition, that the vehicle satisfies the predetermined abnormal wake-up condition.

It should be noted that in the embodiment of the present disclosure, when the controller operates, each controller in the vehicle transmits information through a communication channel, based on which it can be determined whether an activity exists in the network, or the controller may control electronic units operating in the vehicle to send respective interactive information and states to the vehicle communication network.

Therefore, in the embodiment of the present disclosure, whether a network activity lasting for a predetermined duration exists on the communication network may be detected when no wake-up source is detected by the cloud. When it is detected that the network activity lasting for the predetermined duration exists on the communication network, it may be determined that an abnormal wake-up exists, and then an abnormal wake-up warning operation is performed. When no continuous network activity exists, it may be determined that no abnormal wake-up exists.

For example, when no wake-up source is detected in the cloud but the network activity is detected on the communication network, a duration of the network activity may be determined by timing by a timer. When the duration is greater than an abnormal duration threshold, such as 2 seconds, it may be determined that an abnormal wake-up exists, and an abnormal wake-up warning is sent; and when the duration is smaller than 2 seconds, it may be determined that no abnormal wake-up exists, and no processing is required.

Therefore, in the embodiments of the present disclosure, whether the network activity that lasts for the predetermined duration exists on the communication network is detected to determine whether the abnormal wake-up exists. Therefore, the abnormal wake-up of the vehicle is analyzed and determined in a more comprehensive and scientific manner, to allow for timely, accurate and comprehensive monitoring of the abnormal wake-up of the vehicle. In this way, the undercharge of the vehicle due to the abnormal wake-up of the vehicle, which leads to the vehicle being unable to start, can be effectively avoided. As a result, the wake-up state determination function and reliability of the vehicle are greatly improved.

In step S103, in response to determining that the vehicle satisfies the predetermined abnormal wake-up condition, determine that the vehicle is in an abnormal wake-up state, and generate an abnormal wake-up notification signal and send the abnormal wake-up notification signal to a predetermined terminal.

It should be understood by those skilled in the art that, the cloud receives the vehicle information collected by the monitoring function unit of the vehicle in real time, the wake-up flag bit, the communication activity, and the like and determines whether an abnormal wake-up occurs based on the set determination conditions. Further, in an embodiment of the present disclosure, when the abnormal wake-up is detected, positioning information of the vehicle may be obtained, and the abnormal wake-up determination result, the warning information, and the positioning information of the vehicle, and the like are sent in real time to a terminal device such as a mobile APP of the maintenance personnel nearest to the vehicle, based on the positioning information.

After receiving the abnormal warning, the maintenance personnel can go to the site based on the positioning information of the vehicle, performs on-site troubleshooting for the vehicle based on the relevant vehicle information and the abnormal wake-up determination result, and feeds a maintenance result back to the cloud after solving the abnormal problem, to form a closed-loop processing. A logical architecture thereof is shown in FIG. 2.

Therefore, in the embodiments of the present disclosure, various power-up wake-up activities of an intelligent networked vehicle are monitored, and whether the wake-up is normal is determined based on the wake-up source and the state after the wake-up. When the abnormal power-up wake-up is detected, the early warning information is sent to the maintenance personnel, who then conduct subsequent troubleshooting and processing of the problem. Therefore, efficiency and pertinence of vehicle maintenance are greatly improved, which can timely and effectively prevent the abnormal wake-up from causing further damage to the power supply of the vehicle. In this way, the service life of the power supply is prolonged.

The method for monitoring the abnormal wake-up of the vehicle according to the present disclosure will be described below in conjunction with the drawings.

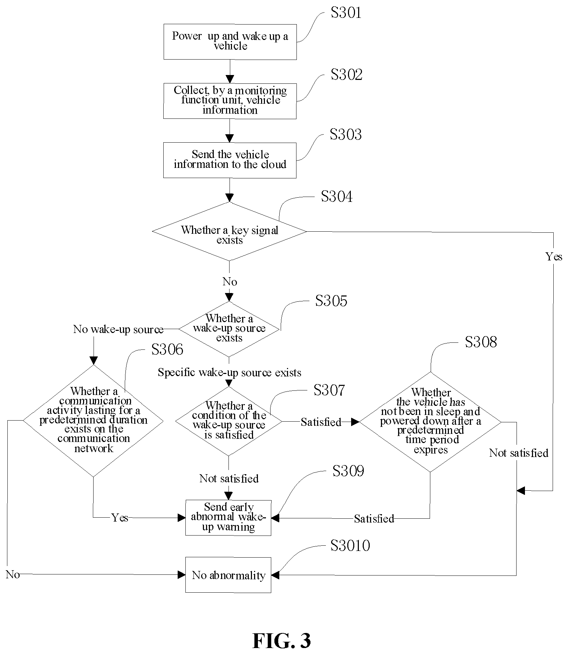

FIG. 3 is a schematic diagram showing an execution logic of a method for monitoring an abnormal wake-up of a vehicle according to an embodiment of the present disclosure. As shown in FIG. 3, the method for monitoring the abnormal wake-up of the vehicle according to an embodiment of the present disclosure includes following steps S301 to S3010.

In step S301, power up a vehicle, and wake up the vehicle.

In step S302, collect vehicle information by using a monitoring function unit.

In step S303, send the vehicle information to the cloud.

In step S304, determine whether a key signal exists; and in response to determining that the key signal exists, perform step S3010; otherwise, perform step S305.

In step S305, determine whether a wake-up source exists; and in response to determining that the wake-up source exists, perform step S307, otherwise, perform step S306.

In step S306, determine whether a communication activity lasting for a predetermined duration exists on the communication network; and in response to determining that the communication activity lasting for the predetermined duration exists on the communication network, perform step S309; otherwise, perform step S3010.

In step S307, determine whether a condition of the wake-up source is satisfied; in response to determining that the condition of the wake-up source is satisfied, perform step S308; and in response to determining that the condition of the wake-up source is not satisfied, perform step S309.

In step S308, determine whether the vehicle does not sleep and is not powered down after a predetermined time period expires; in response to determining that vehicle does not sleep and is not powered down after a predetermined time period expires, perform step S309; otherwise, perform step S3010.

In step S309, send an early abnormal wake-up warning.

In step S3010, determine that no abnormality exists and no processing is required.

In the method for monitoring the abnormal wake-up of the vehicle according to the embodiments of the present disclosure, the actual vehicle information sent by the vehicle is received after the vehicle is powered up and woken up; whether the vehicle satisfies the predetermined abnormal wake-up condition is determined based on the actual vehicle information; and in response to determining that the vehicle satisfies the predetermined abnormal wake-up condition, it is determined that the vehicle is in the abnormal wake-up state, the abnormal wake-up notification signal is generated, and the abnormal wake-up notification signal is sent to the predetermined terminal. In the present disclosure, after the vehicle is monitored to be powered up, the human operation, the normal wake-up, and the abnormal wake-up are distinguished and determined by relying on the collaborative monitoring of the vehicle side and the cloud, and the early warning information is sent to maintenance personnel in a timely manner. Therefore, the timeliness and the accuracy of monitoring the abnormal wake-up of the vehicle are effectively improved, and the early warning reminder is provided to the maintenance personnel, to minimize the damage caused by the abnormal wake-up to the power supply of the vehicle. In this way, the undercharge of the low-voltage power supply of the vehicle is avoided to ensure the service life of the power supply.

Next, an apparatus for monitoring an abnormal wake-up of a vehicle according to an embodiment of the present disclosure will be described with reference to the drawings.

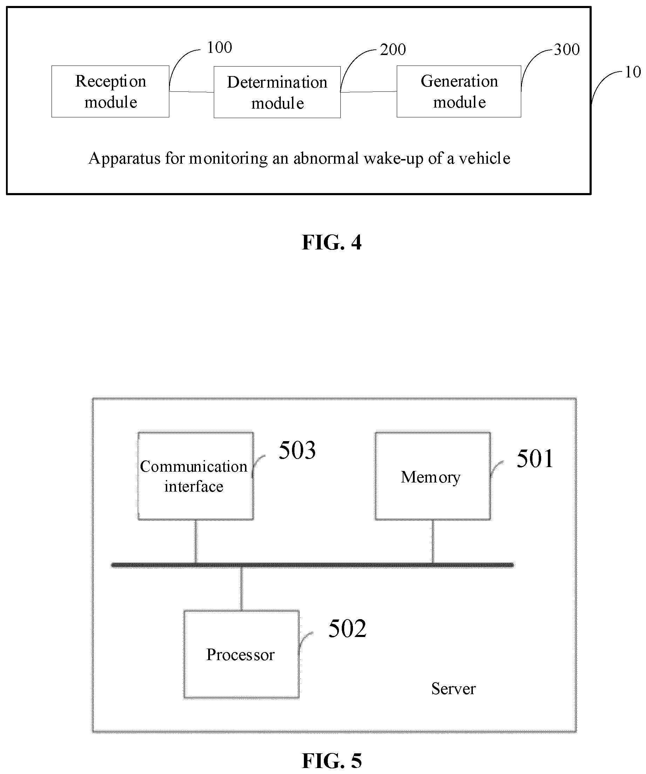

FIG. 4 is a block diagram of an apparatus for monitoring an abnormal wake-up of a vehicle according to an embodiment of the present disclosure.

As shown in FIG. 4, the apparatus 10 for monitoring the abnormal wake-up of the vehicle includes a reception module 100, a determination module 200, and a generation module 300.

The reception module 100 is configured to receive, after the vehicle is powered up and woken up, actual vehicle information sent by the vehicle.

The determination module 200 is configured to determine, based on the actual vehicle information, whether the vehicle satisfies a predetermined abnormal wake-up condition.

The generation module 300 is configured to determine, in response to determining that the vehicle satisfies the predetermined abnormal wake-up condition, that the vehicle is in an abnormal wake-up state, generate an abnormal wake-up notification signal, and send the abnormal wake-up notification signal to a predetermined terminal.

In an embodiment of the present disclosure, the actual vehicle information includes at least one of a vehicle key state, a wake-up source threshold, a wake-up condition, and a current communication activity.

In an embodiment of the present disclosure, the determination module 200 includes an identification unit and a first determination unit.

The identification unit is configured to identify a power-up category of the vehicle based on the vehicle key state.

The first determination unit is configured to determine, in response to the power-up category being a key power-up category, that the vehicle does not satisfy the predetermined abnormal wake-up condition.

In one embodiment of the present disclosure, the determination module 200 further includes a query unit and a second determination unit.

The query unit is configured to query, in response to the power-up category being not the key power-up category, a predetermined table based on the wake-up source threshold to obtain a wake-up identification.

The second determination unit is configured to determine, in response to the wake-up identification being not a predetermined abnormal wake-up identification, that the vehicle does not satisfy the predetermined abnormal wake-up condition; and determine, in response to the wake-up identification being the predetermined abnormal wake-up identification, whether the vehicle satisfies the wake-up condition. In response to determining that the vehicle does not satisfy the wake-up condition, it is determined that the vehicle satisfies the predetermined abnormal wake-up condition; and in response to determining that the vehicle satisfies the wake-up condition, it is determined that the vehicle satisfies the predetermined abnormal wake-up condition when a wake-up duration is greater than a predetermined duration.

In an embodiment of the present disclosure, the determination module 200 further includes a detection unit and a third determination unit.

The detection unit is configured to detect, based on the current communication activity, whether the vehicle satisfies a predetermined continuous network activity condition.

The third determination unit is configured to determine, in response to detecting that the vehicle satisfies the predetermined continuous network activity condition, that the vehicle satisfies the predetermined abnormal wake-up condition.

It should be noted that the above explanation of the embodiments of the method for monitoring the abnormal wake-up of the vehicle is also applicable to the apparatus for monitoring the abnormal wake-up of the vehicle in this embodiment, and details thereof will not be repeated herein.

In the apparatus for monitoring the abnormal wake-up of the vehicle, the actual vehicle information sent by the vehicle is received after the vehicle is powered up and woken up; whether the vehicle satisfies the predetermined abnormal wake-up condition is determined based on the actual vehicle information; and in response to determining that the vehicle satisfies the predetermined abnormal wake-up condition, it is determined that the vehicle is in the abnormal wake-up state, the abnormal wake-up notification signal is generated, and the abnormal wake-up notification signal is sent to the predetermined terminal. In the present disclosure, after the vehicle is monitored to be powered up, the human operation, the normal wake-up, and the abnormal wake-up are distinguished and determined by relying on the collaborative monitoring of the vehicle side and the cloud, and the early warning information is sent to maintenance personnel in a timely manner. Therefore, the real-time and the accuracy of monitoring the abnormal wake-up of the vehicle are effectively improved, and the early warning reminders are given to the maintenance personnel, to minimize the damage caused by the abnormal wake-up to the power supply of the vehicle. In this way, the undercharge of the low-voltage power supply of the vehicle is avoided to ensure the service life of the power supply.

FIG. 5 is a schematic diagram of a structure of a server according to an embodiment of the present disclosure. The server may include a memory 501, a processor 502, and a computer program stored in the memory 501 and executable by the processor 502.

The processor 502 is configured to execute the computer program to implement the method for monitoring the abnormal wake-up of the vehicle as described in the above embodiments.

Further, the server further includes a communication interface 503 configured to perform communication between the memory 501 and the processor 502.

The memory 501 is configured to store a computer program executable by the processor 502.

The memory 501 may include a high-speed random access memory (RAM), and may also include a non-volatile memory, such as at least one disk memory.

If the memory 501, the processor 502, and the communication interface 503 are implemented independently, the communication interface 503, the memory 501, and the processor 502 can be connected to each other via a bus and communicate with each other. The bus can be an Industry Standard Architecture (ISA) bus, a Peripheral Component Interconnect (PCI) bus or an Extended Industry Standard Architecture (EISA) bus, etc. The bus can be classified into an address bus, a data bus, a control bus, etc. For ease of representation, the bus is represented by only one bold line in FIG. 5, but it does not mean that there is only one bus or one type of bus.

In an implementation, if the memory 501, the processor 502, and the communication interface 503 are integrated on a chip, the memory 501, the processor 502, and the communication interface 503 can communicate with each other via an internal interface.

The processor 502 may be a Central Processing Unit (CPU), or an Application Specific Integrated Circuit (ASIC), or one or more integrated circuits configured to implement the embodiments of the present disclosure.

Embodiments of the present disclosure also provide a computer-readable storage medium. The computer-readable storage medium has a computer program stored thereon. The computer program is configured to be executed by a processor to implement the method for monitoring the abnormal wake-up of the vehicle as described above.

Reference throughout this specification to "an embodiment," "some embodiments," "an example," "a specific example," or "some examples," means that a particular feature, structure, material, or characteristic described in connection with the embodiment or example is included in at least one embodiment or example of present disclosure. The appearances of the above phrases in various places throughout this specification are not necessarily referring to the same embodiment or example of the present disclosure. Furthermore, the particular features, structures, materials, or characteristics may be combined in any suitable manner in one or N embodiments or examples. In addition, different embodiments or examples and features of different embodiments or examples described in the specification may be combined by those skilled in the art without mutual contradiction.

In addition, terms such as "first" and "second" are used herein for purposes of description and are not intended to indicate or imply relative importance, or to implicitly show the number of technical features indicated. Thus, the feature defined with "first" and "second" may explicitly or implicitly comprise one or more this feature. In the description of the present disclosure, "N" means at least two, for example, two or three, unless specified otherwise.

Any process or method described in the flowchart or described in other manners herein can be understood as a module, segment or part of codes that include one or N executable instructions for implementing steps of specific logical functions or processes. It can be appreciated by those skilled in the art that the scope of the preferred embodiments of the present disclosure includes additional implementations where functions may not be performed in the order as shown or discussed, including implementations where the involved functions are performed substantially in parallel or even in a reverse order.

It should be noted that the logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or N wires, a portable computer enclosure (a magnetic device), a random access memory (RAM), a read only memory (ROM), an erasable programmable read-only memory (EPROM or a flash memory), an optical fiber device, and a portable compact disk read-only memory (CDROM). In addition, the computer readable medium may even be a paper or other appropriate medium capable of printing programs thereon, this is because the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by hardware, software, firmware or their combination. In the above embodiments, the N steps or methods may be realized by the software or firmware stored in the memory and executed by an appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks or CD, etc. Although embodiments of present disclosure have been shown and described above, it should be understood that above embodiments are just explanatory, and cannot be construed to limit the present disclosure, for those skilled in the art, changes, alternatives, and modifications can be made to the embodiments without departing from spirit, principles and scope of the present disclosure.

## Claims

1. A method for monitoring an abnormal wake-up of a vehicle, comprising:
receiving, after the vehicle is powered up and woken up, actual vehicle information sent by the vehicle;
determining, based on the actual vehicle information, whether the vehicle satisfies a predetermined abnormal wake-up condition; and
determining, in response to determining that the vehicle satisfies the predetermined abnormal wake-up condition, that the vehicle is in an abnormal wake-up state, generating an abnormal wake-up notification signal, and sending the abnormal wake-up notification signal to a predetermined terminal.

2. The method according to claim 1, wherein the actual vehicle information comprises at least one of a vehicle key state, a wake-up source threshold, a wake-up condition, and a current communication activity.

3. The method according to claim 2, wherein said determining, based on the actual vehicle information, whether the vehicle satisfies the predetermined abnormal wake-up condition comprises:
identifying, based on the vehicle key state, a power-up category of the vehicle; and
determining, in response to the power-up category being a key power-up category, that the vehicle does not satisfy the predetermined abnormal wake-up condition.

4. The method according to claim 3, wherein said determining, based on the actual vehicle information, whether the vehicle satisfies the predetermined abnormal wake-up condition further comprises:
querying, in response to the power-up category being not the key power-up category, a predetermined table based on the wake-up source threshold to obtain a wake-up identification;
determining, in response to the wake-up identification being not a predetermined abnormal wake-up identification, that the vehicle does not satisfy the predetermined abnormal wake-up condition; and
determining, in response to the wake-up identification being the predetermined abnormal wake-up identification, whether the vehicle satisfies the wake-up condition, wherein:
in response to determining that the vehicle does not satisfy the wake-up condition, it is determined that the vehicle satisfies the predetermined abnormal wake-up condition, and
in response to determining that the vehicle satisfies the wake-up condition, it is determined that the vehicle satisfies the predetermined abnormal wake-up condition when a wake-up duration is greater than a predetermined duration.

5. The method according to claim 4, wherein said determining, based on the actual vehicle information, whether the vehicle satisfies the predetermined abnormal wake-up condition further comprises:
detecting, based on the current communication activity, whether the vehicle satisfies a predetermined continuous network activity condition; and
determining, in response to detecting that the vehicle satisfies the predetermined continuous network activity condition, that the vehicle satisfies the predetermined abnormal wake-up condition.

6. An apparatus for monitoring an abnormal wake-up of a vehicle, comprising:
a reception module configured to receive, after the vehicle is powered up and woken up, actual vehicle information sent by the vehicle;
a determination module configured to determine, based on the actual vehicle information, whether the vehicle satisfies a predetermined abnormal wake-up condition; and
a generation module configured to determine, in response to determining that the vehicle satisfies the predetermined abnormal wake-up condition, that the vehicle is in an abnormal wake-up state, generate an abnormal wake-up notification signal, and send the abnormal wake-up notification signal to a predetermined terminal.

7. The apparatus according to claim 6, wherein the actual vehicle information comprises at least one of a vehicle key state, a wake-up source threshold, a wake-up condition, and a current communication activity.

8. The apparatus according to claim 7, wherein the determination module comprises:
an identification unit configured to identify, based on the vehicle key state, a power-up category of the vehicle; and
a first determination unit configured to determine, in response to the power-up category being a key power-up category, that the vehicle does not satisfy the predetermined abnormal wake-up condition.

9. The apparatus according to claim 8, wherein the determination module further comprises:
a query unit configured to query, in response to the power-up category being not the key power-up category, a predetermined table based on the wake-up source threshold to obtain a wake-up identification; and
a second determination unit configured to determine, in response to the wake-up identification being not a predetermined abnormal wake-up identification, that the vehicle does not satisfy the predetermined abnormal wake-up condition, and determine, in response to the wake-up identification being the predetermined abnormal wake-up identification, whether the vehicle satisfies the wake-up condition, wherein:
in response to determining that the vehicle does not satisfy the wake-up condition, it is determined that the vehicle satisfies the predetermined abnormal wake-up condition, and
in response to determining that the vehicle satisfies the wake-up condition, it is determined that the vehicle satisfies the predetermined abnormal wake-up condition when a wake-up duration is greater than a predetermined duration.

10. The apparatus according to claim 9, wherein the determination module further comprises:
a detection unit configured to detect, based on the current communication activity, whether the vehicle satisfies a predetermined continuous network activity condition;
a third determination unit configured to determine, in response to detecting that the vehicle satisfies the predetermined continuous network activity condition, that the vehicle satisfies the predetermined abnormal wake-up condition.

11. A server, comprising:
a memory;
a processor; and
a computer program stored in the memory and executable by the processor,
wherein the processor is configured to execute the computer program to implement the method for monitoring the abnormal wake-up of the vehicle according to any one of claims 1 to 5.

12. A computer-readable storage medium, having a computer program stored thereon, wherein the computer program is configured to be executed by a processor to implement the method for monitoring the abnormal wake-up of the vehicle according to any one of claims 1 to 5.
